# EUROPEAN PATENT SPECIFICATION

(11) **EP 0 459 464 B1**
(45) Date of publication and mention of the grant of the patent: **24.04.1996**
(21) Application number: 91108825.0
(22) Date of filing: 29.05.1991
(51) Int. Cl.: C08L 83/07, C08K 9/10

(54) **Curable organosiloxane composition exhibiting reduced mold staining and scorching**
Härtbare Organopolysiloxanzusammensetzung mit Beständigkeit gegen Fleckenbildung und gegen Anvulkanisierung
Composition d'organopolysiloxane durcissable ne formant pas de taches pur la surface des moules et résistant à la prévulcanisation

(30) Priority: 31.05.1990 JP 142808/90
(43) Date of publication of application: 04.12.1991
(73) Proprietor: Dow Corning Toray Silicone Company, Limited, Tokyo 103 (JP)
(72) Inventor: Takao, Matsushita, Kisarazu-shi, Chiba Prefecture (JP); Hirosi, Fichigami, Ichihara-shi, Chiba Prefecture (JP); Hiroshi, Honma, Ichihara-shi, Chiba Prefecture (JP)
(74) Representative: Spott, Gottfried, Dr.

(56) References cited:
- EP-A- 0 072 474
- EP-A- 0 300 643
- EP-A- 0 355 459
- US-A- 4 528 354
- US-A- 4 929 669

## Description

This invention relates to curable organosiloxane compositions. More particularly, this invention relates to organosiloxane compositions containing as the main ingredient a high consistency, gum type polyorganosiloxane. The present compositions are particularly suitable for processing by extrusion molding and by pressure-molding techniques such as press molding, transfer molding, and injection molding. The compositions are characterized by an absence of mold staining in combination with a resistance to scorching and good mold release.

Organosiloxane compositions characterized by those skilled in the art as millable typically contain as the major organosiloxane ingredient at least one gum type organopolysiloxane. The molding methods generally chosen for these millable organosiloxane compositions are extrusion molding and pressure-molding methods such as press molding, transfer molding, and injection molding. The curing agents typically used in these moldable compositions are organic peroxides. The advantages associated with the use of these curing agents are excellent storage stability in the vicinity of room temperature and a relatively long working time at elevated temperatures, which facilitates fabrication of these compositions using conventional molding techniques.

Curable compositions containing organic peroxides have some disadvantages when used in pressure molding applications. These disadvantages include poor mold release properties, resulting in cracking or tearing of the rubber during demolding, and mold staining due to incomplete curing in the regions adjacent to the molding's parting line. Mold staining is believed to result from an inhibition of curing by atmospheric oxygen.

Disadvantages associated with extrusion molding of high- consistency peroxide curable organosiloxane compositions include development of surface tackiness which, like mold staining, is due to an inhibition of curing at the molding's surface by atmospheric oxygen. A dusting agent such as talc is typically used to prevent surface tackiness.

The methods that have been proposed to improve mold release include addition to curable organosiloxane composition of any of a variety of internal release agents such as fatty acid metal salts such as zinc stearate and calcium stearate. This remedy does not provide a basic or fundamental solution to such problems as the poor vulcanization in the vicinity of the molding's parting line and surface tackiness.

Another method that has been used to cure both high consistency and liquid curable organosiloxane compositions is a hydrosilylation reaction between an organopolysiloxane containing at least two vinyl or other ethylenically unsaturated hydrocarbon radicals and an organohydrogenpolysiloxane. This reaction is typically catalyzed by platinum metal and platinum compounds. One of the problems associated with this type of curable composition is the relatively short storage time of compositions containing all of the reactive ingredients, even when known platinum catalyst inhibitors are present in the curable composition.

The use of organic peroxides to accelerate curing of organosiloxane compositions that cure by a platinum-catalyzed hydrosilylation reaction is taught in United States patent no. 3,992,355, which issued to Itoh et al on November 19, 1976. These compositions also contain hydrazine as a platinum catalyst inhibitor to extend the useful working time of the composition.

United States patent no. 4,329,275 which issued to Hatanaka et al. on May 11, 1982 teaches the use of small amounts of organic peroxides in combination with specified platinum/phosphorus complexes. The peroxide inhibits curing of the composition at room temperature while increasing the activity of the platinum catalyst at the elevated temperatures used to cure the composition.

The use of vinyl-specific organic peroxides to improve the compression set exhibited by elastomers prepared from liquid organosiloxane compositions that cure by a platinum-catalyzed hydrosilylation reaction is taught in United States patent no. 4,929,669, which issued to Jensen on May 29, 1990.

The present inventors discovered that when concentrations of peroxide larger than those disclosed in the aforementioned patent to Hatanaka et al. are present in the curable composition, a considerable amount of scorching occurs at even relatively low molding temperatures.

EP-A 0 072 474 discloses curable organopolysiloxane compositions comprising an organopolysiloxane, an organohydrogenpolysiloxane, a filler and a platinum catalyst wherein the platinum catalyst is encapsulated in a solid substance having a melting point between 70 and 250°C.

An objective of this invention is to eliminate the disadvantages associated with using more than about 0.1 weight percent, based on curable organopolysiloxane, of organic peroxides in organosiloxane compositions curable by a platinum-catalyzed hydrosilylation reaction.

The present inventors discovered that the above mentioned problems could be eliminated or substantially reduced by encapsulating the platinum-containing catalyst within a microparticulate form of a thermoplastic resin.

This invention provides an improved curable organosiloxane composition comprising
(A) 100 weight parts of an organopolysiloxane gum containing at least 2 silicon-bonded alkenyl radicals in each molecule and represented by the average unit formula

   RₐSiO_{(4-a)/2}

   where R is a monovalent hydrocarbon or halogenated hydrocarbon radical, and the value of a is from 1.8 to 2.3, inclusive,
(B) from 10 to 100 weight parts of a reinforcing filler,
(C) from 0.1 to 10 weight parts of an organohydrogen-polysiloxane containing at least 2 silicon-bonded hydrogen atoms in each molecule,
(D) 0.0000001 to 0.01 weight parts based on platinum metal per 100 weight parts of ingredient (A) of a platinum-containing hydrosilylation catalyst, and
(E) 0.1 to 10 weight parts of an organic peroxide
characterized in that said hydrosilylation catalyst is encapsulated within spherical microparticles of a thermoplastic silicone resin having a softening point in the range from 50 to 200°C, where said microparticles exhibit a diameter of from 0.01 to 10 microns and contain a concentration of said catalyst equivalent to at least 0.01 weight percent, calculated on the basis of platinum metal.

The advantages that characterize the present compositions include but are not limited to:
Long-term storage stability prior to curing,
Long working time during the curing process,
Good mold releasability,
Elimination of mold staining caused by presence of uncured or incompletely cured rubber in the vicinity of the molding's parting line, and
Negligible surface tackiness on the cured molding.

The organopolysiloxane gum referred to as ingredient A is the principal or main ingredient of the present compositions. This gum must contain at least 2 silicon-bonded alkenyl radicals in each molecule and is represented by the average unit formula

RₐSiO_{(4-a)/2}

where the substituent represented by R is selected from monovalent hydrocarbon radicals exemplified by alkyl such as methyl, ethyl, propyl, butyl, hexyl, and octyl; alkenyl such as vinyl, allyl, and hexenyl; aryl such as phenyl; and by halogenated monovalent hydrocarbon radicals such as 3,3,3-trifluoropropyl. The value of a in this formula should be from 1.8 to 2.3, inclusive.

The molecular structure of ingredient A comprises a sequence of siloxane units arranged in either a linear or branched configuration. The degree of polymerization of this ingredient should be sufficient to achieve a product referred to in the organosiloxane art as a "gum". The viscosity of the gum at 25°C. should be at least 10⁷ mm/s (centistokes) and its average molecular weight should be at least 25 x 10⁴ and preferably at least 40 x 10⁴.

The reinforcing filler comprising ingredient B includes all of the known reinforcing fillers for silicone rubbers. Examples of suitable fillers include but are not limited to microparticulate silica and carbon black. Microparticulate silica is exemplified by fumed silica and precipitated silica. Ultramicroparticulate silicas with particle diameters below 50 nanometers and with specific surface areas of at least 100 m/g are preferred. Most preferably the silica has been surface-treated with an organosilane, organosilazane, or diorganocyclopolysiloxane.

Carbon blacks are used to impart electrical conductivity to the cured silicone rubber.
Representative types of carbon black include acetylene blacks, Ketjen(R) blacks, furnace blacks, and thermal blacks.

The organohydrogenpolysiloxane, referred to as ingredient C of the present compositions, is a crosslinker for the organopolysiloxane (ingredient A). Ingredient C must contain at least 2 silicon-bonded hydrogen atoms in each molecule in order for the present compositions to form a network structure. Other than these silicon-bonded hydrogen atoms, the organic groups bonded to the silicon atoms of ingredient C include the same group of monovalent hydrocarbon and halogenated hydrocarbon radicals represented by R in the foregoing average unit formula of ingredient A. These organic groups may comprise only a single species within the individual molecule or may comprise a mixture of two or more species.

The molecular structure of this organohydrogenpolysiloxane can be straight-chain, network, or three-dimensional. Ingredient C can be a single homopolymer or copolymer, or a mixture of two or more of these types of polymers. The organohydrogen polysiloxane(s) should typically have a degree of polymerization corresponding to a viscosity at 25°C. of 0.5 to 50,000 mPas (centipoise) and preferably of 1 to 10,000 mPas (centipoise).

The concentration of ingredient C should be from 0.1 to 10 weight parts per 100 weight parts of ingredient A.

The organoperoxide, referred to as ingredient E of the present compositions, is one of the two catalysts which promote curing of the present organosiloxane compositions. Any of the known organoperoxides can be used as ingredient E. Useful organoperoxides include but are not limited to dicumyl peroxide, di-tert-butyl peroxide, tert-butyl cumyl peroxide, 2,5-dimethyl-2,5-di(tert-butylperoxy)hexane, 1,1-bis(tert-butylperoxy)-3,3,5-trimethylcyclohexane, benzoyl peroxide, and 2,4-dichlorobenzoyl peroxide.

The concentration of organic peroxide is from 0.1 to 10 weight parts per 100 weight parts of ingredient A.

The combination of an organic peroxide with a platinum-containing hydrosilylation catalyst that is encapsulated within a spherical microparticulate form of a silicone resin is the feature that characterizes the present compositions and is responsible for the unique combination of desirable molding properties exhibited by articles prepared from these compositions.

Ingredient D, the microparticulate platinum -containing silicone resin, consists of spherical microparticles of a silicone resin containing at least 0.01 weight%, based on platinum metal, of a platinum-containing hydrosilylation catalyst. Suitable catalysts included but are not limited to platinum metal, platinum compounds and compositions based on these compounds that have been shown to catalyze hydrosilylation reactions. Specific examples of suitable hydrosilylation catalysts are platinum micropowder, chloroplatinic acid, alcohol-modified chloroplatinic acid, platinum/diketone complexes, olefin/chloroplatinic acid complexes, alkenyl-siloxane/chloroplatinic acid complexes, and any of these catalysts supported on carriers such as alumina, silica, and carbon black.

Complexes of chloroplatinic acid and alkenylsiloxanes are preferred, based on their high catalytic activity as curing catalysts, the platinum/alkenylsiloxane complex disclosed in Japanese Patent Publication Number 42-22924 [22,924/67] being particularly preferred.

The silicone resin used to encapsulate the hydrosilylation catalyst must have a softening point in the range of from 50 to 200°C. When this softening point is less than 50°C., there is a drastic decline in storage stability following addition of this ingredient to the curable organosiloxane composition. When the softening point exceeds 200°C., the temperature at which catalytic activity appears becomes so high that it does not develop under conventional processing conditions.

To achieve optimum curing characteristics the softening point of the silicone resin is preferably from 70 to 150°C.

While there are no specific limitations on the molecular structure and chemical structure of the silicone resin used to encapsulate the hydrosilylation catalyst, it is essential that the resin be impermeable to the catalyst and that it not dissolve in the organosiloxane ingredients of the curable composition. Suitable silicone resins include but are not limited to resins with the average unit formula

R'ₐSiO_{(4 - a)/2}

where R' represents a combination of methyl and phenyl radicals and the value of a is from 0.8 to 1.8.

Ingredient D is a spherical microparticulate material consisting essentially of the platinum-containing hydrosilylation catalyst and the aforementioned silicone resin. The concentration of catalyst within the microparticle is preferably equivalent to from 0.01 to 5 weight percent, calculated on the basis of platinum metal.

The average diameter of the microparticles must be within the range of from 0.01 to 10 micrometers and the particles must have a spherical contour to achieve a satisfactory level of catalytic activity during curing and to maintain a stable dispersion of the microparticles following their incorporation into a curable composition of this invention.

In accordance with a typical procedure for preparing the platinum-containing silicone resin microparticles, the desired platinum catalyst and a silicone resin having a softening point from 50 to 200°C. are dissolved in a suitable solvent. The resultant solution is then sprayed as finely divided droplets into a current of heated gas in order to volatilize the solvent while at the same time solidifying the droplets of solubilized thermoplastic resin into a microparticulate form while the droplets are suspended in the gas stream.

In accordance with an alternative method, a solution is first prepared by dissolving the platinum catalyst and suitable silicone resin in an organic water-immiscible solvent that is compatible with these ingredients. The resultant solution is then emulsified by combining it with an aqueous solution containing a suitable surfactant. The organic solvent is then evaporated from this emulsion to precipitate the platinum-containing silicone resin as spherical microparticles. The particles are then washed with a solvent which will dissolve and remove the platinum catalyst adhering to the surface of the microparticles but will not dissolve or weaken the silicone resin.

The concentration of ingredient D in the curable compositions of this invention is typically equivalent to from 0.0000001 to 0.01 weight parts, based on platinum metal, preferably from 0.000001 to 0.001 weight parts of platinum metal, per 100 weight parts of ingredient A.

In the narrowest sense, a curable composition of this invention can contain only ingredients A through E described in the preceding sections of this specification. The compositions can also include additional ingredients that are typically present in curable organosiloxane compositions. These additional ingredients include but are not limited to: crepe-hardening inhibitors such as organosilanes, organosilazanes, and silanol-terminated diorganopolysiloxanes; and platinum-catalyst inhibitors, such as benzotriazoles, acetylenic compounds, and hydroperoxy compounds. Catalyst inhibitors are typically added to increase the storage stability and working time of organosiloxane compositions curable by a hydrosilylation reaction.

Depending on the end use application of the present compositions, other additives known for use in silicone rubber compositions may be added, for example, inorganic fillers, pigments, thermal stabilizers, and mold-release agents. Specific fillers and pigments include but are not limited to diatomaceous earth, quartz powder, calcium carbonate, mica, aluminum oxide, zinc oxide, magnesium oxide, titanium oxide, carbon black, and red iron oxide. Thermal stabilizers are exemplified by rare-earth oxides, rare-earth hydroxides, cerium silanolate, and the cerium salts of fatty acids. Mold-release agents are exemplified by fatty acids and their metal salts such as stearic acid, zinc stearate, and calcium stearate.

The present curable compositions can be prepared in a simple and straightforward manner by blending ingredients A through E to homogeneity. A particularly preferred method is to first to mix ingredients A and B to homogeneity and then blend in ingredients C, D, and E together with any additional ingredients.

The curable compositions of this invention exhibit excellent molding properties, including mold release, and are therefore highly qualified for pressure molding applications, for press molding, transfer molding, and injection molding.

The following examples and reference examples describe preferred curable compositions and platinum-containing hydrosilylation catalysts. The comparative examples serve to compare the molding performance of these compositions with the performance of prior art compositions that do not contain the present combination of organic peroxide and silicone resin-encapsulated hydrosilylation catalyst. The exemplified compositions should not be interpreted as limiting the scope of the invention defined in the accompanying claims. Unless otherwise specified all parts and percentages are by weight and viscosities and other properties were measured at 25°C.

### Reference Example 1

### Preparation of a platinum/vinylsiloxane complex composition

Six grams of an aqueous chloroplatinic acid solution containing 33 percent platinum and 16 g 1,3-divinyltetramethyl-disiloxane were dissolved in 35 g isopropyl alcohol. Ten grams sodium bicarbonate were added to this solution, and the resultant mixture reacted by heating it for 30 minutes at 70 to 80°C. while stirring the suspension. The water and isopropyl alcohol were then evaporated off at 45°C. under a pressure of 6.7 kPa (50 mm Hg), and the solids were removed by filtration to yield a 1,3-divinyltetramethyldisiloxane solution of a platinum/vinylsiloxane complex catalyst containing 0.6 percent platinum.

### Reference Example 2

### Preparation of thermoplastic silicone resin

A solution was prepared by dissolving 332 g phenyltrichlorosilane, 53 g dimethyldichlorosilane and 110 g diphenyldichlorosilane in 150 g toluene. A cohydrolysis was conducted by dripping this solution into liquid mixture containing 430 g toluene, 142 g methyl ethyl ketone, and 114 g water. The hydrogen chloride generated as a by-product of the hydrolysis was removed by washing the reaction mixture with water. The organic phase of the reaction mixture was then isolated, and the methyl ethyl ketone was removed from this phase by heating. 0.2 Grams potassium hydroxide was then added as a condensation catalyst followed by heating, during which the water formed as a by-product was distilled out.

The reaction mixture was then neutralized with acetic acid, followed by repeated washings with water. Removal of the remaining solvent yielded a thermoplastic silicone resin with a glass transition temperature of 65°C. and a softening point of 85°C.

### Reference Example 3

### Preparation of spherical platinum-containing silicone resin microparticles

900 Grams of the thermoplastic silicone resin prepared as described in Reference Example 2, 500 g toluene, and 4,600 g dichloromethane were introduced into a stirrer-equipped glass reactor and blended to form a homogeneous solution. 44.4 g of the platinum/vinylsiloxane complex described in Reference Example 1 were then added with stirring to form a homogeneous solution of the platinum/ vinylsiloxane complex and thermoplastic silicone resin. Using a dual flow nozzle and a current of heated nitrogen, this solution was continuously sprayed into a spray dryer chamber obtained from Ashizawa Niro Atomizer K. K. The tmperature of the nitrogen was 95°C. at the spray dryer inlet, 45°C. at the spray dryer outlet, and the nitrogen flow rate was 1.3 m³/minute. After 1 hour of operation of the spray drier, 450 g of a microparticulate silicone resin containing the platinum/ vinylsiloxane complex catalyst were recovered using a bag filter. This microparticulate catalyst had an average particle diameter of 1.1 micrometers and contained 0.5 weight of particles larger than 5 micrometers. The morphology of this microparticulate catalyst was evaluated by scanning electron microscopy, and it was confirmed that the particles were spherical in contour.

### Example 1

The following ingredients were introduced into a kneader mixer and blended to homogeneity with heating: 100 parts of an organopolysiloxane gum exhibiting a degree of polymerization of 5,000 and consisting essentially of 99.85 mole% dimethylsiloxane units and 0.15 mole% methylvinylsiloxane units, 7.0 parts of a silanol-terminated dimethylsiloxane exhibiting a viscosity of 60 mm/s (centistokes), 8 parts of dry-method silica with a specific surface area of 200 m/g, and 36 parts of wet-method silica with a specific surface area of 130 m/g.

A curable composition referred to as example 1 was prepared by mixing the following ingredients into 100 parts of the rubber base prepared as described in the preceding section of this example:
0.2 parts of a dimethylhydrogenpolysiloxane exhibiting a viscosity of 25 mm/s (centistokes) and the average formula

   Me₃SiO(MeHSiO)₃₀SiMe₃,
02 parts of 2,5-dimethyl-2,5-di(tert-butylperoxy)hexane,
0.01 parts of the silicone resin microparticulate catalyst prepared as described in Reference Example 3,
0.03 parts 1-ethynyl-1-cyclohexanol as a platinum catalyst inhibitor, and
0.1 parts calcium stearate as a mold-release agent.

For comparative purposes, a curable organosiloxane composition outside the scope of the present invention, referred to hereinafter as Comparison Example 1, was prepared as described for the composition referred to as "example 1", but omitting the microparticulate platinum-containing silicon resin, dimethylhydrogenpolysiloxane and platinum-catalyst inhibitor and increasing the quantity of peroxide to 0.4 parts.

A second comparative composition, referred to hereinafter as Comparison Example 2, was prepared using the same ingredients as "example 1", with the exception that 0.08 parts of the platinum/vinylsiloxane complex catalyst described in Reference Example 1 and containing 0.6 weight percent platinum was used in place of the spherical microparticulate catalyst-containing silicone resin.

The three curable organosiloxane compositions prepared were injected into molds designed to produce a keypad for use in a desk-top calculator or computer, and their injection molding characteristics were evaluated during this process. The physical properties of these silicone rubber compositions were measured according to Japanese Industrial Standard JIS K 6301. These measurement results are reported in Table 1.

The results of the evaluation demonstrated that the composition of the present invention referred to as "example 1" was completely cured up to the very tip of the flash, and no mold staining developed even after several hundred moldings.

Comparison Example 1 cured incompletely at the tip of the flash. After several tens of moldings, the flash scrap adhered to the mold, the defect rate for the molded article substantially increased, and there was evidence of mold staining.

There was no evidence of mold staining using the composition identified as Comparison Example 2, however, scorching occurred in the area of the screw at temperatures of 60 to 70°C. during injection molding, and the injection pressure began to rise so substantially that long-term operation was impaired.

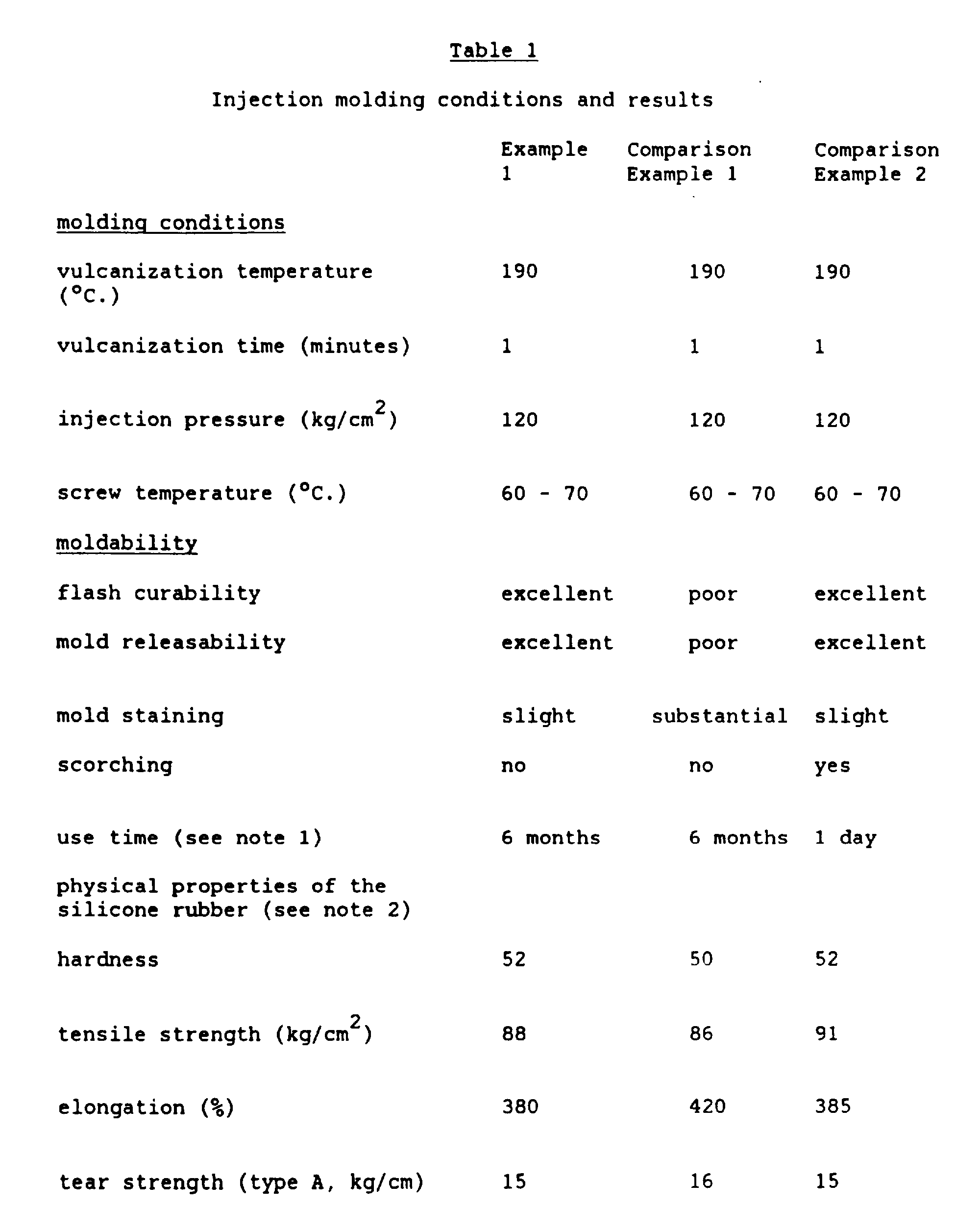

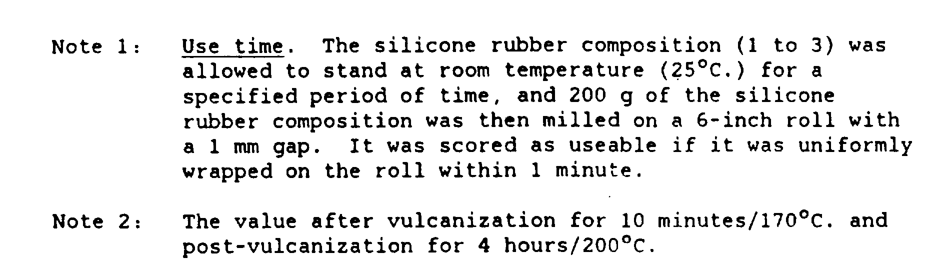

### Example 2

A curable organosiloxane composition of this invention, referred to hereinafter as example 2 was prepared using the same types and amounts of ingredients as the composition referred to as "example 1", with the modification that 1,1-bis(tert-butylperoxy)-3,3,5-trimethylcyclohexane was used in place of the 2,5-dimethyl-2,5-di(tert-butylperoxy)hexane. This composition was subjected to injection molding testing as described in Example 1 using a vulcanization temperature of 170°C.

The composition referred to as example 2 cured extremely well right up to the tip of the flash, and no mold staining appeared even after several hundred moldings. Table 2 reports these measurement results as well as the physical properties of the cured silicone rubber.

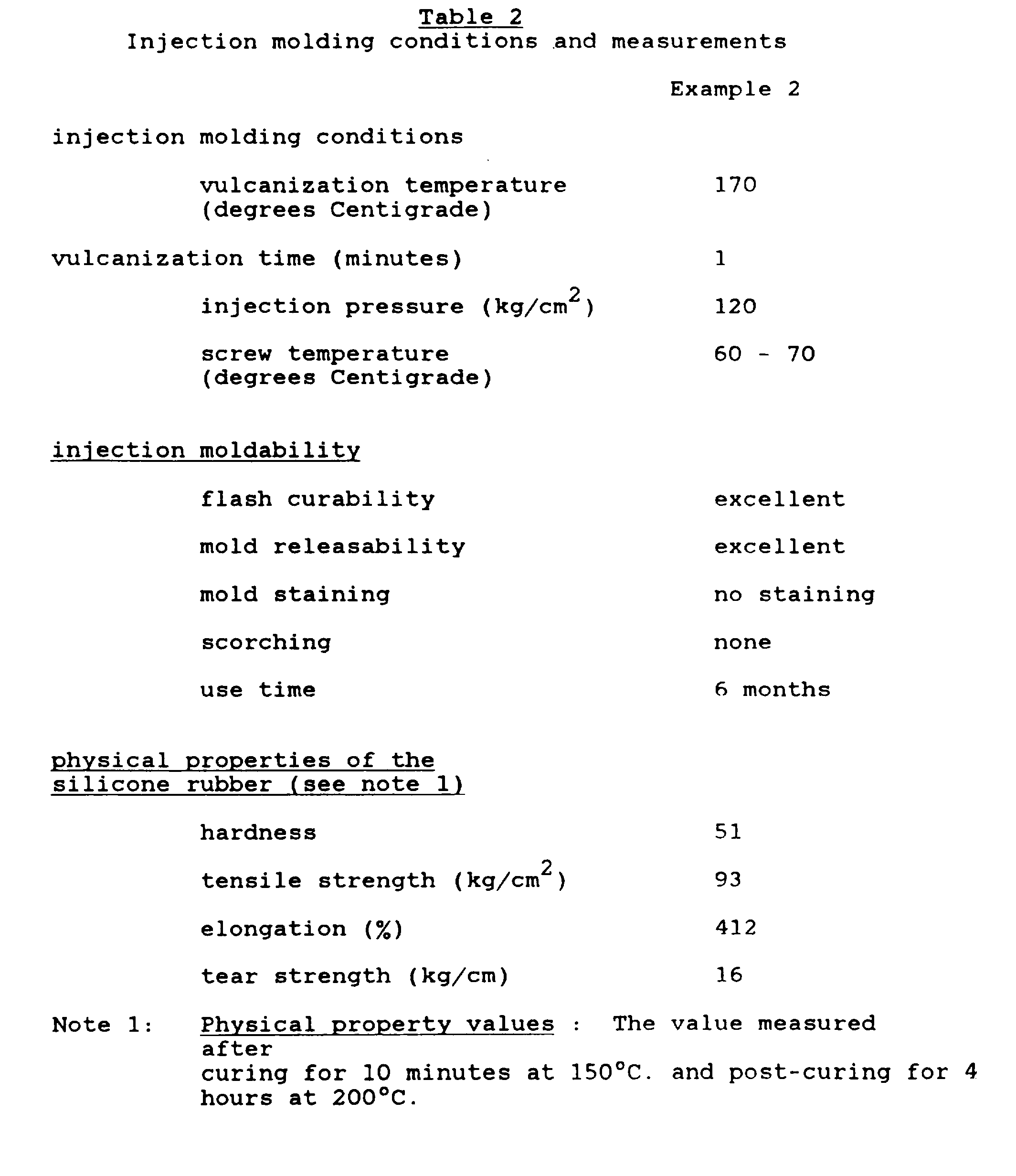

### Example 3

The following ingredients were introduced into a kneader mixer and blended to homogeneity to prepare a base : 65 parts acetylene black and 100 parts of an organopolysiloxane gum exhibiting a degree of polymerization of 5000 and consisting essentially of 99.50 mole% dimethylsiloxane units and 0.50 mole% methylvinylsiloxane units. A curable organosiloxane composition of this invention referred to hereinafter as example 3 was then prepared by mixing the following into 100 parts of the base:
2.0 parts dimethylhydrogenpolysiloxane with the average molecular formula

   Me₃SiO(Me₂SiO)₃(MeHSiO)₅SiMe₃,
0.24 parts spherical microparticulate catalyst from Reference Example 3,
0.003 parts 1-ethynyl-1-cyclohexanol, and
2.0 parts 2,5-dimethyl-2,5-di(tert-butylperoxy)hexane.

A curable organosiloxane composition referred to hereinafter as comparison example 3 was prepared using the same types and amounts of ingredients as the composition referred to as "example 3" but omitting the spherical microparticulate catalyst, dimethylhydrogenpolysiloxane, and platinum catalyst inhibitor.

These compositions were pressure molded as described in Example 1 into keypads for desk top electronic equipment. The composition "example 3" was completely cured, even including the flash that overflowed from the mold, and the mold release was also quite good. By contrast the flash from the composition identified as comparison example 3 was uncured, and the mold release of the cured key pad was extremely poor. The results of the various property measurements are reported in Table 3.

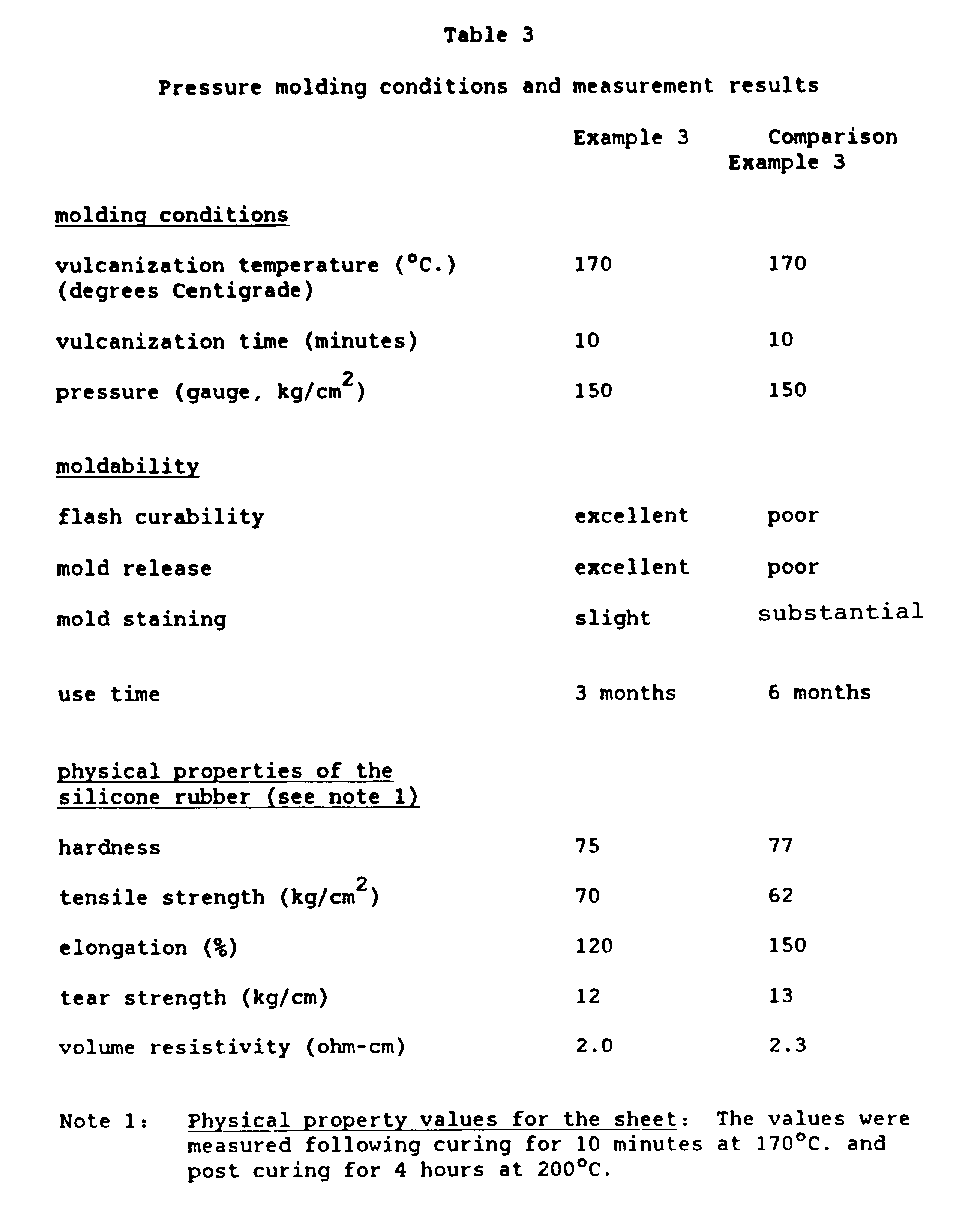

### Example 4

A base was prepared by introducing the following ingredients into a kneader mixer and blending to homogeneity with heating: 100 parts organopolysiloxane gum exhibiting a degree of polymerization of 5,000 and consisting essentially of 99.85 mole% dimethylsiloxane units and 0.15 mole% methylvinylsiloxane units, 5.0 parts of a silanol-terminated dimethylsiloxane with a viscosity of 60 mm/s (centistokes), 40 parts fumed silica with a specific surface area of 130 m/g, and 30 parts diatomaceous earth. A curable organosiloxane composition of this invention referred to hereinafter as "example 4" was then prepared by blending the following ingredients into 100 parts of the rubber base described in this example:
0.4 parts of dimethylhydrogenpolysiloxane with the average molecular formula

   Me₃SiO(Me₂SiO)₃(MeHSiO)₅SiMe₃,
0.06 parts of the spherical microparticulate catalyst prepared as described in Reference Example 3,
0.003 parts 1-ethynyl-1-cyclohexanol as the platinum catalyst inhibitor, and
1.6 parts 2,4-dichlorobenzoyl peroxide.

For comparative purposes a curable organosiloxane outside the scope of the present invention, referred to hereinafter as comparison example 4 was prepared using the same types and amounts of ingredients as example 4, but omitting the spherical microparticulate catalyst, dimethylhydrogenpolysiloxane, and platinum-catalyst inhibitor.

A second comparative composition, referred to as comparison example 5, was prepared using the same types and amounts of ingredients as the composition referred to as "example 4", but in this case changing the concentration of the platinum catalyst inhibitor to 0.02 parts and replacing the microparticulate platinum-containing silicone resin with 0.05 parts of the platinum/vinylsiloxane complex catalyst described in Reference Example 1.

The three compositions described in this example were used coated onto an electric wire. The coatings were cured by exposing the coated wires for 10 seconds in a hot air oven maintained at a temperature of 450°C. The outer diameter of the coated wire was 1.2 mm and the thickness of the cured coating was 0.5 mm. The compositions prepared from example 4 and comparison example 5 were completely free of surface tackiness and thus did not require a surface coating of talc to suppress the tackiness. The composition referred to as comparison example 5 had a short storage time and could not be re-kneaded on the roll after 1 day.

The surface of the wire coated with the composition referred to as comparison example 4 exhibited substantial surface tackiness, and its surface had to be coated with talc in order to suppress this tackiness. Table 4 reports the results of the physical and electrical property measurements performed on the coated wire.

**Table 4**

| Electric wire coating conditions and measurement results | | | |
|---|---|---|---|
| | Example 4 | Comparison Example 4 | Comparison Example 5 |
| vulcanization conditions | | | |
| vulcanization oven temperature (°C.) | 450 | 450 | 450 |
| vulcanization time (seconds) | 10 | 10 | 10 |

| surface tack | | | |
|---|---|---|---|
| surface tackiness | no | yes | no |
| talc required? | no | yes | no |
| use time | 3 months | 3 months | 1 day |

| physical property values for the electric wire | | | |
|---|---|---|---|
| tensile strength (kg/cm) | 79 | 83 | 82 |
| elongation (%) | 283 | 305 | 299 |
| insulation resistance (Mohm-km) | 8000 | 7600 | 8300 |
| breakdown voltage (kV) | 17 | 16 | 13 |

## Claims

1. A curable organosiloxane composition comprising
(A) 100 parts by weight of an organopolysiloxane gum containing at least 2 silicon-bonded alkenyl radicals in each molecule and represented by the average unit formula
RₐSiO_{(4-a)/2}
where R represents a monovalent hydrocarbon or halogenated hydrocarbon radical, and the value of a is from 1.8 to 2.3, inclusive,
(B) 10 to 100 weight parts of a reinforcing filler,
(C) 0.1 to 10 weight parts organohydrogenpolysiloxane having at least 2 silicon-bonded hydrogen atoms in each molecule,
(D) 0.0000001 to 0.01 weight parts based on platinum metal per 100 weight parts of ingredient (A) of a platinum-containing hydrosilylation catalyst, and
(E) 0.1 to 10 weight parts of an organic peroxide
characterized in that said hydrosilylation catalyst is encapsulated within spherical microparticles of a thermoplastic silicone resin having a softening point in the range from 50 to 200°C, where said microparticles exhibit a diameter of 0.01 to 10 micrometers and contain at least 0.01 weight percent of said catalyst, calculated on the basis of platinum metal.

2. A composition according to claim 1, where
each R is individually selected from alkyl, alkenyl, and fluorinated alkyl radicals, the viscosity of said organopolysiloxane is at least 10⁷ mm/s (centistokes) and the molecular weight of said organopolysiloxane is at least 40x10⁴,
said reinforcing filler is a microparticulate silica or carbon black,
the viscosity of said organohydrogenpolysiloxane is from 0.5 to 50,000 mPa.s (centipoise) and the concentration of said organohydrogenpolysiloxane in said composition is from 0.1 to 10 parts by weight per 100 parts of said organopolysiloxane,
said peroxide is selected from dicumyl peroxide, di-tert-butyl peroxide, tert-butyl cumyl peroxide, 2,5-dimethyl-2,5-di(tert-butylperoxy)hexane, 1,1-bis(tert-butylperoxy)3,3,5-trimethylcyclohexane, benzoyl peroxide, and 2,4-dichlorobenzoyl peroxide,
said platinum-containing hydrosilylation catalyst is an alkenylsiloxane/chloroplatinic acid complex,
the softening point of said silicone resin is from 70 to 150°C, and the average unit formula of said resin is
R'ₐSiO_{(4 - a)/2}
where each R' individually represents a methyl or a phenyl radical and the value of a is from 0.8 to 1.8,
said microparticles contain from 0.01 to 5 weight percent of said catalyst, calculated as platinum metal, and the concentration of said catalyst in said composition is equivalent to from 0.001 to 100 parts of platinum metal per million parts of said organopolysiloxane.

3. A composition according to claim 2 where the particles of said microparticulate silica do not exceed 50 nanometers in diameter and the surface area of said particles is at least 100 m/g,
the viscosity of said organohydrogenpolysiloxane is from 1 to 10,000 mPa.s (centipoise),
the concentration of said catalyst is equivalent to from 0.001 to 10 parts of platinum metal per million parts of said organopolysiloxane, and
each R is selected from methyl and vinyl.

## Patentansprüche

1. Härtbare Organosiloxanzusammensetzung umfassend
(A) 100 Gew.-Teile eines Organopolysiloxangummis mit mindestens zwei siliciumgebundenen Alkenylresten in jedem Molekül und der durchschnittlichen Einheitsformel
RₐSiO_{(4-a)/2} ,
worin R einen monovalenten Kohlenwasserstoff- oder halogenierten Kohlenwasserstoffrest bedeutet und der Wert von a 1,8 bis einschließlich 2,3 ist,
(B) 10 bis 100 Gew.-Teile eines verstärkenden Füllstoffs,
(C) 0,1 bis 10 Gew.-Teile Organohydrogenpolysiloxan mit mindestens zwei siliciumgebundenen Wasserstoffatomen in jedem Molekül,
(D) 0,0000001 bis 0,01 Gew.-Teile, bezogen auf Platinmetall, pro 100 Gew.-Teile Inhaltsstoff (A) eines platinhaltigen Hydrosilylierungskatalysators und
(E) 0,1 bis 10 Gew.-Teile eines organischen Peroxids, dadurch gekennzeichnet, daß der Hydrosilylierungskatalysator in kugelförmigen Mikroteilchen aus einem thermoplastischen Silikonharz mit einem Erweichungspunkt im Bereich von 50 bis 200°C eingekapselt ist, wobei die Mikroteilchen einen Durchmesser von 0,01 bis 10 µm aufweisen und mindestens 0,01 Gew.-% Katalysator enthalten, berechnet auf Basis des Platinmetalls.

2. Zusammensetzung nach Anspruch 1, worin
- jeder Rest R einzeln ausgewählt ist aus Alkyl-, Alkenyl- und fluorierten Alkylresten, die Viskosität des Organopolysiloxans mindestens 10⁷ mm/s (centistoke) ist und das Molekulargewicht des Organopolysiloxans mindestens 40 x 10⁴ ist,
- der verstärkende Füllstoff ein mikroteilchenförmiges Siliciumdioxid oder Ruß ist,
- die Viskosität des Organohydrogenpolysiloxans 0,5 bis 50.000 mPa·s (centipoise) ist und die Konzentration des Organohydrogenpolysiloxans in der Zusammensetzung 0,1 bis 10 Gew.-Teile pro 100 Teile Organopolysiloxan ist,
- das Peroxid ausgewählt ist aus Dicumylperoxid, Di-tert.-butylperoxid, tert.-Butylcumylperoxid, 2,5-Dimethyl-2,5-di(tert.-butylperoxy)hexan, 1,1-Bis(tert.-butylperoxy)-3,3,5-trimethylcyclohexan, Benzoylperoxid und 2,4-Dichlorbenzoylperoxid,
- der platinhaltige Hydrosilylierungskatalysator ein Alkenylsiloxan/Chlorplatinsäure-Komplex ist.
- der Erweichungspunkt des Silikonharzes 70 bis 150°C ist und die durchschnittliche Einheitsformel des Harzes
R'ₐSiO_{(4-a)/2}
ist, wobei jeder Rest R' einzeln einen Methylrest oder einen Phenylrest bedeutet und der Wert von a 0,8 bis 1,8 ist,
- die Mikroteilchen 0,01 bis 5 Gew.-% Katalysator enthalten, berechnet als Platinmetall, und die Konzentration des Katalysators in der Zusammensetzung äquivalent ist 0,001 bis 100 Teilen Platinmetall pro 1 Million Teile Organopolysiloxan.

3. Zusammensetzung nach Anspruch 2, worin die Teilchen des mikroteilchenförmigen Siliciumdioxids 50 nm im Durchmesser nicht übersteigen und die Oberfläche der Teilchen mindestens 100 m/g ist,
- die Viskosität des Organohydrogenpolysiloxans 1 bis 10.000 mPa·s (centipoise) ist,
- die Konzentration des Katalysators äquivalent ist 0,001 bis 10 Teilen Platinmetall pro 1 Million Teile Organopolysiloxan, und
- jeder Rest R ausgewählt ist aus Methyl- und Vinylresten.

## Revendications

1. Composition d'organosiloxanes durcissable, comprenant
(A) 100 parties en poids d'une gomme d'organopolysiloxane contenant au moins 2 radicaux alcényles liés au silicium dans chaque molécule et représentée par la formule unitaire moyenne
RₐSiO_{(4-a)/2}
où R représente un radical hydrocarboné ou hydrocarboné halogéné monovalent, et la valeur de a est de 1,8 à 2,3, inclusivement,
(B) 10 à 100 parties en poids d'une charge renforçante,
(C) 0,1 à 10 parties en poids d'un organohydrogénopolysiloxane ayant au moins 2 atomes d'hydrogène liés au silicium dans chaque molécule,
(D) 0,0000001 à 0,01 partie en poids, sur la base du platine métallique pour 100 parties en poids d'ingrédient (A), d'un catalyseur d'hydrosilylation contenant du platine, et
(E) 0,1 à 10 parties en poids d'un peroxyde organique,
caractérisée en ce que ledit catalyseur d'hydrosilylation est encapsulé dans des microparticules sphériques en résine de silicone thermoplastique ayant un point de ramollissement dans la gamme de 50 à 200 °C, lesdites microparticules présentant un diamètre de 0,01 à 10 µm et contenant au moins 0,01 % en poids dudit catalyseur, calculé sur la base du platine métallique.

2. Composition selon la revendication 1, dans laquelle
chaque R est individuellement choisi parmi les radicaux alkyles, alcényles et alkyles fluorés, la viscosité dudit organopolysiloxane est au moins 10⁷ mm/s et le poids moléculaire dudit organopolysiloxane est d'au moins 40 x 10⁴, ladite charge renforçante est une silice microparticulaire ou du noir de carbone,
la viscosité dudit organohydrogénopolysiloxane est de 0,5 à 50 000 mPa.s et la concentration dudit organohydrogénopolysiloxane dans ladite composition est de 0,1 à 10 parties en poids pour 100 parties dudit organopolysiloxane,
ledit peroxyde est choisi parmi le peroxyde de dicumyle, le peroxyde de di-tert-butyle, le peroxyde de tert-butyle et de cumyle, le 2,5-diméthyl-2,5-di(tert-butylperoxy)hexane, le 1,1-bis(tert-butylperoxy)3,3,5-triméthylcyclohexane, le peroxyde de benzoyle et le peroxyde de 2,4-dichlorobenzoyle,
ledit catalyseur d'hydrosilylation contenant du platine est un complexe alcénylsiloxane/acide chloroplatinique,
le point de ramollissement de ladite résine de silicone est de 70 à 150 °C, et la formule unitaire moyenne de ladite résine est
R'ₐSiO_{(4-a)/2}
où chaque R' représente individuellement un radical méthyle ou phényle et la valeur de a est de 0,8 à 1,8,
lesdites microparticules contiennent de 0,01 à 5 % en poids dudit catalyseur, calculé en platine métallique, et la concentration dudit catalyseur dans ladite composition est équivalente à 0,001 à 100 parties de platine métallique par million de parties dudit organopolysiloxane.

3. Composition selon la revendication 2, dans laquelle les particules de ladite silice microparticulaire ne dépassent pas 50 nm de diamètre et la surface spécifique desdites particules est d'au moins 100 m/g,
la viscosité dudit organohydrogénopolysiloxane est de 1 à 10 000 mPa.s,
la concentration dudit catalyseur est équivalente à 0,001 à 10 parties de platine métallique par million de parties dudit organopolysiloxane, et
chaque R est choisi parmi les radicaux méthyle et vinyle.
